(19) Europäisches Patentamt
European Patent Office
Office européen des brevets

(11) **EP 1 521 695 B1**

(12) **EUROPÄISCHE PATENTSCHRIFT**

(45) Veröffentlichungstag und Bekanntmachung des Hinweises auf die Patenterteilung:
**13.04.2011  Patentblatt 2011/15**

(21) Anmeldenummer: 03762627.2

(22) Anmeldetag: **04.07.2003**

(51) Int Cl.:
***B60T 8/1755*** *(2006.01)*

(86) Internationale Anmeldenummer:
**PCT/EP2003/007188**

(87) Internationale Veröffentlichungsnummer:
**WO 2004/005093 (15.01.2004 Gazette 2004/03)**

(54) **VERFAHREN ZUM ERHÖHEN DER STABILITÄT EINES FAHRZEUGS**

METHOD FOR INCREASING THE STABILITY OF A MOTOR VEHICLE

PROCEDE POUR ACCROITRE LA STABILITE D'UN VEHICULE

(84) Benannte Vertragsstaaten:
**DE FR**

(30) Priorität: **05.07.2002  DE 10230259
12.05.2003  DE 10321385**

(43) Veröffentlichungstag der Anmeldung:
**13.04.2005  Patentblatt 2005/15**

(73) Patentinhaber: **Continental Teves AG & Co. oHG
60488 Frankfurt am Main (DE)**

(72) Erfinder:
• **SCHWARZ, Ralf
69118 Heidelberg (DE)**
• **FRITZ, Stefan
64390 Erzhausen (DE)**
• **SCHILASKY, Rex
60439 Frankfurt am Main (DE)**
• **BAUER, Urs
65934 Frankfurt am Main (DE)**

(56) Entgegenhaltungen:
**EP-A- 0 465 958     DE-A- 4 419 131
DE-A- 19 751 227     US-A- 5 316 379**

**Beschreibung**

Die Erfindung betrifft eine Einrichtung zum Erhöhen der Stabilität eines Fahrzeugs und ein ABS Regelverfahren nach dem Oberbegriff des Anspruchs 1 bzw. des Anspruchs 16.

Die Erfindung betrifft dabei ein Verfahren zur Stabilisierung eines Fahrzeugs und Verkürzung des Bremswegs bei Bremsungen auf inhomogenen Fahrbahnen mit unterschiedlichen Reibwerten.

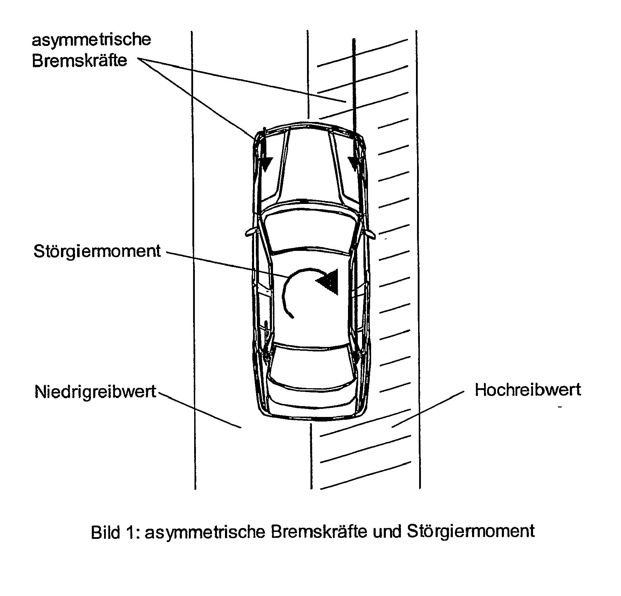

Bei Bremsungen auf inhomogenen Fahrbahnen (d.h. Fahrbahnen mit unterschiedlichen Reibwerten auf der linken bzw. rechten Fahrzeugseite) treten aufgrund der unterschiedlichen Reibwerte (rechts - links) asymmetrische Bremskräfte auf. Aus diesen asymmetrischen Bremskräften resultiert ein Giermoment um die Fahrzeughochachse, welches das Fahrzeug in eine Gierbewegung in Richtung der Straßenseite mit dem höheren Reibwert versetzt. In Figur 1 ist ein Fahrzeug 10 auf einer derartigen inhomgenen Fahrbahn dargestellt.

Fahrzeuge ohne das elektronische Bremssystem ABS werden in solchen Fahrsituationen instabil, da beim Blockieren der Räder die Seitenführungskraft der Reifen verloren geht. Das durch die asymmetrischen Bremskräfte entstandene Giermoment versetzt das Fahrzeug dabei in schnelle Drehbewegungen um die Fahrzeughochachse zur Hochreibwertseite hin (Schleudern).

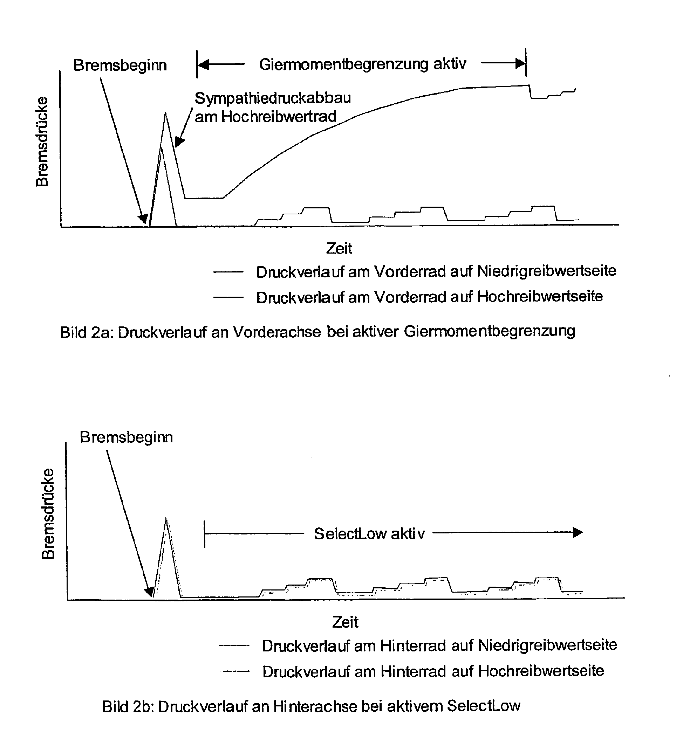

Bei Fahrzeugen mit dem elektronischen Bremssystem ABS wird bei Bremsungen in diesen kritischen Situationen das Schleudern verhindert, da durch die Vermeidung blockierender Räder die Seitenführungskraft der Räder erhalten bleibt. Das Giermoment um die Fahrzeughochachse, resultierend aus den asymmetrischen Bremskräften, wird dadurch aber nicht kompensiert, sondern der Fahrer muss dies durch Gegenlenken ausgleichen. Um den Fahrer in solch kritischen Fahrsituationen (plötzliches Auftreten des Giermoments) nicht zu überfordern, wird die ABS-Regelstrategie in solchen Fahrsituationen angepasst, wie in den Figuren 2a und 2b näher dargestellt. Dabei wird während dem Anbremsen an der Vorderachse der Druckaufbau derart gesteuert, daß die Druckschere (Druckdifferenz) an der Vorderachse zwischen dem Rad auf der Hoch- und Niedrigreibwertseite nur langsam aufgebaut wird. Dies führt dazu, dass sich das Giermoment um die Fahrzeughochachse nur langsam aufbaut und dem Fahrer ausreichend Zeit zum Gegenlenken bleibt (Giermomentbegrenzung an der Vorderachse). Gleichzeitig wird die Hinterachse derart unterbremst, dass an beiden Rädern nur der Bremsdruck des Rades auf der Niedrigreibwertseite zugelassen wird (SelectLow). Dadurch steht an der Hinterachse immer ausreichend Seitenführungspotential zur Verfügung und das Fahrzeug ist durch Lenkeingriffe (Gegenlenken) für den Fahrer leicht zu stabilisieren. Durch diese beiden ABS-Maßnahmen, Giermomentbegrenzung an der Vorderachse und SelectLow an der Hinterachse, deren prinzipiellen Druckverläufe in den Figuren 2a bzw. 2b dargestellt sind, wird aber sehr viel Bremsleistung verschenkt, da das Reibwertpotential der Hochreibwertseite nicht ideal ausgenutzt wird. Dies resultiert in einem deutlich verlängerten Bremsweg, der dennoch als Vorteil anzusehen ist, gegenüber einem Fahrzeug ohne ABS, welches instabil wird.

Diese, den Bremsweg verlängernde Giermomentenaufbauverzögerung kann bei Anwendung einer Kompensation durch einen vom Fahrer unabhängigen, selbsttätigen Lenkeingriff entfallen oder verringert werden. Hierzu ist es aus der DE 40 38 079 A1 (welche der US 5,316,379 entspricht) bekannt, das bei einer ABS Regelung in einer μ-Split-Fahrsituation auftretende Giermoment zumindest teilweise dadurch zu kompensieren, dass ein von der Differenz der getrennt eingeregelten Bremsdrücke abhängiger Kompensations-Lenkwinkel eingestellt bzw. dem vom Fahrer vorgegebenen Lenkwinkel überlagert wird. Der autonome Kompensations-Lenkwinkel (automatisches Gegenlenken) verbessert die Beherrschbarkeit des Fahrzeugs bei Bremsungen auf inhomogenen Fahrbahnen. Dazu ist ein aktives Lenksystem notwendig, d.h. ein Lenksystem, mit dem sich aktiv und unabhängig von der Fahrervorgabe ein zusätzlicher Lenkwinkel an den Rädern erzeugen lässt. Dies ist beispielsweise mit einer Überlagerungslenkung oder einem Steer-by-Wire Lenksystem möglich.

Die DE 197 51 227 A1 offenbart ein Verfahren, bei dem der vom Fahrer initiierten Lenkbewegung eine durch einen Stellantrieb hervorgerufene Bewegung mit Hilfe eines Überlagerungsgetriebes hinzugefügt wird. Der Sollwert des Zusatzlenkwinkels wird in Abhähngigkeit von der Gierwinkelgeschwindigkeit des Fahrzeugs bestimmt. Dies geschieht durch einen integrierenden Giergeschwindigkeitsregler, der nur dann eingeschaltet wird, wenn eine äußere Störung der Fahrzeugbewegung, wie z.B. ein bei einer μ-Split-Bremsung auftretendes Giermoment detektiert wird. Zur Erkennung einer μ-Split-Bremsung wird überprüft, ob die Differenz der Bremsdrücke an den Vorderrädern einen Grenzwert überschreitet. Daraufhin wird ein μ-Split-Flag auf Eins gesetzt und der integrierende Regler eingeschaltet. Der Zusatzlenkwinkel wird auf den Wert Null zurückgeführt, wenn keine äußere Störung mehr vorliegt.

Der Erfindung liegt die Aufgabe zugrunde, ein Verfahren und eine Regelung zu schaffen, die die Beherrschbarkeit des Fahrzeugs bei Bremsungen auf inhomogenen Fahrbahnen verbessern und komfortabler gestalten.

Erfindungsgemäß wird diese Aufgabe dadurch gelöst, dass bei den Lenkeingriffen ein Störgrößen-Kompensationsanteil bei den Kompensations-Lenkwinkeln berücksichtigt wird, der aus dem Bahnverlauf (bzw. dem Fahrzustand) des Fahrzeugs ermittelt wird.

Dieser Störgrößen-Kompensationsanteil beruht auf dem Gierverhalten des Fahrzeugs und ist Bestandteil einer Kompensations-Lenkwinkelanforderung, die mindestens zwei Störgrößen-Kompensationsanteile umfasst. Dabei erfolgt über die von Sensoren erfassten und in einem Modell der Fahrdynamikregelung logisch verknüpften und analysierten Messdaten, in die Daten eines Kraftfahrzeugs einbezogen werden können, aus dem Vergleich eines Sollgiersignals mit einem Istgiersignal eine Generierung des zweiten Störgrößen-Kompensationslenkwinkelanteils für ein aktives Lenksystem (z.B.eine Überlagerungslenkung oder Steer by Wire Lenkung), dessen Aktuator entsprechend einer Kompensations-Lenkwinkelanforderung verstellt wird und damit den vom Fahrer vorgegebenen Lenkwinkel überlagert. Solche aktiven Lenksysteme können sowohl an der Vorderachse, als auch an der Hinterachse oder an allen Rädern des Fahrzeugs zum Einsatz kommen.

Das Verfahren sieht vorteilhaft vor, dass ein erster Störgrößen-Kompensationsanteil der Kompensations-Lenkwinkelanforderung $\Delta\delta$ unter Einbeziehung von Bremskraft-Differenzen an den gebremsten Rädern ermittelt wird, dass der zweite Störgrößen-Kompensationsanteil aus dem Bahnverlauf (bzw. Fahrzustand) des Fahrzeugs ermittelt wird und dass der Lenkwinkel in Abhängigkeit von den Störgrößen-Kompensationsanteilen modifiziert wird. Dabei werden der erste und zweite Störgrößen-Kompensationsanteil erfindungsgemäß in einem Addierer addiert und der Regelung bzw. Steuerung zur Lenkungskorrektur des vom Fahrer vorgegebenen Lenkwinkels zur Verfügung gestellt.

Zur genauen Ermittlung des zweiten Kompensationsanteils ist vorgesehen, dass der zweite Kompensationsanteil in einer Vorrichtung ermittelt wird, die eine Referenz-Fahrzeugmodellschaltung aufweist, in der die zur Festlegung des Bahnverlaufs erforderlichen Eingangsgrößen, wie Fahrzeuggeschwindigkeit, Lenkwinkel, ggf. Reibwert eingegeben werden, welche aufgrund eines in der Referenz-Fahrzeugmodellschaltung befindlichen, die Eigenschaften des Fahrzeugs nachbildenden Fahrzeugmodells einen Sollwert für eine Regelgröße bestimmt und bei der dieser Sollwert in einem Vergleicher mit einem gemessenen Wert für diese Regelgröße verglichen wird, wobei in einem Fahrzustandsregler der zweite Kompensationsanteil des Lenkwinkels $\Delta\delta_R$ aus dem Vergleichswert (Regelgröße) berechnet wird. Vorteilhaft ist dabei, dass die Gierwinkelgeschwindigkeit und/oder die Querbeschleunigung und/oder der Schwimmwinkel und/oder deren Ableitungen als Sollwert für die Regelgröße bestimmt wird.

Der ermittelte Gesamt-Kompensations-Lenkwinkel berücksichtig die Bewegung vom Fahrzeug im Raum (Fahrzeugzustand), wobei die Kompensationsanteile aus zwei Größen so ermittelt werden, dass der erste Kompensationsanteil $\Delta\delta_Z$ unter Einbeziehung eines auf Basis unterschiedlicher Bremskräfte ermittelten Störgiermoments $M_Z$ bestimmt wird und der zweite Anteil $\Delta\delta_R$ unter Einbeziehung des Fahrzeuggierverhaltens ermittelt wird.

Das Lenkwinkel-Korrekturverfahren ist vorteilhaft so aufgebaut, dass der erste Kompensationsanteil als Steueranteil und der zweite Kompensationsanteil als Regelanteil vorgesehen sind.

Dabei wird das Störgiermoment $M_Z$ durch eine logische Verknüpfung der Radeinschlagwinkel der gelenkten Räder, den Bremsdrücken und dem Drehverhalten der Räder ermittelt. Aus den eingesteuerten Bremsdrücken werden die Bremskräfte nach der Beziehung

$$\hat{F}_{x,i} = f\left\{r, B, p_i, J_{Whl}, \dot{\omega}_i\right\}$$

mit
$\hat{F}_{x,i}$ = Bremskraft an einem Rad i
r = dynamischer Reifenradius
B = Bremsenkennwert
$p_i$ = Radbremsdruck
$J_{Whl}$ = Trägheitsmoment des Rades
$\dot{\omega}_i$ = Drehbeschleunigung eines Rades i
oder

$$\hat{F}_{x,i} = f\left\{r, B, p_i\right\}$$

vorteilhaft ermittelt. Das Störgiermoment wird in Abhängigkeit von den Bremskräften nach der Beziehung

$$\hat{M}_z = f\left\{\hat{F}_{FL}, s_{FL}, \hat{F}_{FR}, s_{FR}, l_F, \hat{F}_{RL}, s_{RL}, \hat{F}_{RR}, s_{RR}, \delta\right\}$$

mit
$\hat{F}_{FL}$ = Bremskraft vorne links
$S_{FL}$ = halbe Spurweite des Vorderrades links

$\hat{F}_{FR}$ = Bremskraft vorne rechts

$S_{FR}$ = halbe Spurweite des Vorderrades rechts

$l_{\overline{F}}$ = Abstand der Vorderachse vom Schwerpunkt

$\overline{F}_{RL}$ = Bremskraft h int en links

$\hat{S}_{RL}$ = halbe Spurweite des H int errades links

$\overline{F}_{RR}$ = Bremskraft h int en rechts

$S_{RR}$ = halbe Spurweite des H int errades rechts

$\delta$ = Radeinschlagswinkel der gelenkten Räder

ermittelt.

Um die Dynamik des Lenkwinkel-Korrekturverfahrens zu verbessern, ist vorgesehen, dass die Kompensationsverstärkungen $K_{FFW}$ und $K_{FB}$ der einzelnen, zurückgeführten Regelgrößen in Abhängigkeit vom Fahrverhalten des Fahrzeugs und den Umgebungsbedingungen angepasst werden.

Die Ermittlung des Steueranteils $\Delta\delta_z$ der Lenkwinkelanforderung $\Delta\delta$ wird nach der Beziehung $\Delta\delta_z = K_{FFW} (\Delta\overline{p}, v) * M_z$ basierend auf dem ermittelten wirkenden Störgiermoment. Hierbei wird die Kompensationsverstärkung $K_{FFW}$ $(\Delta\overline{p}, v)$ über dem mittleren Bremsdruck der Vorderachse, welche das mittlere zur Verfügung stehende Reibwertpotential (gemitteltes Reibwertpotential von Hoch- und Niedrigreibwertseite entspricht dem mittleren Bremsdruck an der Vorderachse, wenn beide Vorderräder in ABS-Regelung und somit den jeweils verfügbaren Reibwert voll ausschöpfen) und der Fahrzeuggeschwindigkeit, die über das Drehverhalten der Räder in Form einer Fahrzeugreferenzgeschwindigkeit bestimmt wird, adaptiert.

Eine weitere vorteilhafte Ausbildung sieht vor, dass der zweite Kompensationsanteil $\Delta\delta_R$ der Lenkwinkelanforderung $\Delta\delta$ aus einem auf der Gierratenabweichung $\Delta\dot{\psi}$ beruhenden P-Anteil $\Delta\delta_{R,P}$ und aus einem auf der Gierbeschleunigungsabweichung $\Delta\ddot{\psi}$ beruhenden D-Anteil ermittelt wird. Dabei wird der P-Anteil nach der Beziehung $\Delta\delta_{R,P} = K_{FB,P}(v)*\Delta\dot{\psi}$ ermittelt. Der Verstärkungsfaktor $K_{FB,P}(v)$ für die Rückführung der Regelgröße Gierratenabweichung $\Delta\dot{\psi}$ erfolgt dabei in Abhängigkeit von der Fahrzeuggeschwindigkeit, die über das Drehverhalten der Räder in Form einer Fahrzeugreferenzgeschwindigkeit bestimmt wird.

Vorteilhaft wird der D-Anteil nach der Beziehung $\delta_{R,D} = K_{FB,D} (v)*\Delta\ddot{\psi}$ ermittelt, wobei der Verstärkungsfaktor für die Rückführung der Regelgröße Gierbeschleunigungsabweichung $\Delta\ddot{\psi}$ in Abhängigkeit von der Fahrzeuggeschwindigkeit erfolgt.

Das Verfahren zum Erhöhen der Fahrstabilität eines Fahrzeugs weist mindestens eine ABS Regelungs-Funktion auf, um vorteilhaft ein ABS Regelverfahren, bei dem ein durch Bremsvorgänge mit unterschiedlichen Bremsdrücken bzw. -kräften an den einzelnen Rädern hervorgerufener Fahrzustand, der aus dem ermittelten Bremskraft-Unterschied bestimmt wird, nach einem der Ansprüche 1 bis 15 so weiterbilden zu können, dass durch einen Eingriff in ein steuerbares bzw. regelbares Lenksystem des Fahrzeugs die aus dem Fahrzustand resultierenden Instabilitäten zumindest teilkompensiert werden. Die ABS Regelungs-Funktion ist dabei vorteilhaft Bestandteil einer ESP Regelung.

Die Korrektur des Lenkwinkels wird zugelassen, wenn die Fahrsituation mit Seitenweise unterschiedlichen Reibwerten ($\mu$ - Split) erkannt wurde. Die Erkennung eines Fahrzustands bzw. Bahnverlaufs mit einer durch unterschiedliche Bremsdrücke bzw. -kräfte hervorgerufenen Abweichung zwischen Fahrzeugbewegung und Lenkwunsch des Fahrers wird ermittelt und Lenkeingriffe zugelassen, wenn mindestens die folgenden Bedingungen erfüllt sind:

- Bei erkannter Geradeausfahrt:

  a) Bremslichtschalter-Signal vorhanden und
  b) Bremslichtschalter-Sensor in Ordnung und
  c) Bremsung durch Fahrer erkannt mittels THZ-Druck und
  d) Vorwärtsfahrt erkannt und
  e) eine der folgenden Bedingungen ebenfalls erfüllt ist
  e1) wenn für einen bestimmten Zeitraum ein Vorderrad in der ABS-Regelung ist und das andere Vorderrad nicht in der ABS-Regelung ist oder
  e2) wenn beide Vorderräder im ersten ABS-Zyklus sind und die Druckdifferenz an der Vorderachse größer als ein Grenzwert ist oder
  e3) wenn für einen bestimmten Zeitraum beide Vorderräder in ABS-Regelung sind und mindestens ein Vorderrad einen bestimmten Mindest-ABS-Blockierdruck aufweist und der eine Blockierdruck um mehr als einen Grenzwert den Blockierdruck des anderen Rads überschreitet.

- Bei erkannter Kurvenfahrt:

  a) Bremslichtschalter-Signal vorhanden und
  b) Bremslichtschalter-Sensor in Ordnung und

c)Bremsung durch Fahrer erkannt mittels THZ-Druck und

d)Vorwärtsfahrt erkannt und

e) eine der folgenden Bedingungen ebenfalls erfüllt ist

e1) das kurvenäußere Vorderrad zeitlich vor dem kurveninneren Vorderrad in die ABS-Regelung kommt oder wenn für einem Zeitraum

e2) beide Vorderräder in der ABS-Regelung sind und mindestens ein Vorderrad einen bestimmten Mindest-ABS-Blockierdruck aufweist und der Blockierdruck des kurveninneren Rads um mehr als einen bestimmten Grenzwert über dem Blockierdruck des kurvenäußeren Rads liegt.

Zur Deaktivierung des Lenkwinkelkorrektur-Verfahrens muß mindestens eine der folgenden Forderungen erfüllt sein, damit die aktiven Lenkeingriffe beendet werden:

a)kein Vorderrad ist in der ABS-Regelung oder

b)es liegt keine Bremslichtschalter-Signal vor oder

c)der Bremslichtschalter-Sensor ist defekt oder

d)die Bremsung durch Fahrer wird nicht erkannt (kein THZ-Druck vorhanden).

Vorzugsweise kann mittels des ABS Regelverfahrens die ABS Bremsdruckregelung in $\mu$-*Split* Fahrsituationen modifiziert werden. Die Erfindung sieht daher eine ABS Bremsdruckregelung mit Einzelradregelung wenigstens an einer Fahrzeugachse vor, bei der aufgrund von unterschiedlichem Reibwert auf den beiden Fahrzeugseiten die bei der ABS Regelung auftretende Abweichung zwischen Fahrzeugbewegung und Lenkwunsch des Fahrers zumindest teilweise dadurch kompensiert wird, dass ein Kompensationslenkwinkel ermittelt und dem Fahrzeuglenkwinkel vorzugsweise unter Verwendung der Verfahren nach einem der Ansprüche 1 bis 20 überlagert wird.Die ABS Bremsdruckregelung ist gekennzeichnet durch die Schritte:

Zulassen von hohen Druckaufbaugradienten am Hochreibwertrad. Zulassen von Druckunterschieden an der Hinterachse nach der Beziehung $\Delta p_{HA} = f(\psi, \delta_{Whl}, v, a_y)$.

Um die ABS Regelungs-Funktion in jeder Situation aufrecht zu erhalten und damit die Lenkfähigkeit des Fahrzeugs in Brems-situationen mit hohem Bremsdruck weiter bestehen bleibt, ist vorgesehen, dass bei Ausfall des steuerbaren bzw. regelbaren Lenksystems auf die herkömmliche ABS Regelstrategie zurückgegriffen wird.

Eine Einrichtung sieht einen Fahrdynamikregler mit mindestens einer ABS-Funktion, vorzugsweise einer ESP- und ABS-Funktion, vor, die mit einem Regler und/oder einer Steuerung zur Lenkungskorrektur verbunden sind, wobei die Einrichtung so ausgebildet ist, dass sie eine erste Ermittlungseinheit zum Ermitteln des vom Fahrer vorgegebenen Lenkwinkels aufweist

eine zweite Ermittlungseinheit zum Ermitteln eines Störgrößenkompensations-Lenkwinkels auf der Basis von Bremskräften und/oder Bremsdrücken bzw. einem Störgiermoment aufweist, eine dritte Einrichtung zum Ermitteln eines Störgrößenkompensations-Lenkwinkels auf der Basis des FahrzeugGierverhaltens aufweist und

eine Logikeinheit zum Verknüpfen der ersten und zweiten Störgrößenkompensations-Lenkwinkel zu einer Kompensations-Lenkwinkelanforderung aufweist.

Durch die Verfahren und Einrichtungen werden die folgenden Vorteile erreicht:

- Durch das automatische Gegenlenken des Regelsystems wird der Fahrer entlastet, so dass er idealerweise keinerlei Korrekturen mehr vornehmen muss.
- Die Aufteilung in Störgrößenkompensation und überlagerte Fahrzustandsregelung bewirkt als wesentlicher Vorteil, dass mit Hilfe der Störgrößenaufschaltung sofort nach Auftreten der Störung darauf reagiert werden kann, und nicht erst, wenn das Fahrzeug droht instabil zu werden. Durch die überlagerte Fahrzustandsregelung wird das Gesamtverhalten des Fahrzeugs verbessert und Störungen, die von der reinen Steuerung (Störgrößenkompensation) nicht kompensiert werden können, werden hierdurch ausgeregelt.
- Durch das im Vergleich zum Fahrer viel schnellere Erkennen der Situation und das viel schnellere Gegenlenken durch das Regelsystem, kann vom elektronischen Bremssystem ABS das Reibwertpotential an den einzelnen Rädern wesentlich besser ausgenutzt werden. Hierzu werden die ABS-Strategien auf inhomogenen Fahrbahnen derart angepasst, dass an der Vorderachse ein viel schnellerer Druckaufbau am Rad auf der Hochreibwertseite zugelassen wird und an der Hinterachse eine Druckdifferenz abhängig vom Radeinschlagwinkel, der Fahrgeschwindigkeit und den Fahrzustandsgrößen (z.B. Gierrate oder Querbeschleunigung) zugelassen wird (aufgeweichtes SelectLow). Durch das bessere Ausnutzen des Reibwertpotentials vor allem auf der Hochreibwertseite, ergeben sich wesentlich kürzere Bremswege.
- Durch den Einsatz des Regelsystems in Kombination mit einem aktiven Lenksystem und den angepassten ABS-Regelstrategien ist es möglich, den bei Bremsungen auf inhomogenen Reibwerten auftretenden Zielkonflikt zwischen Gegenlenkaufwand für den Fahrer und Bremswegverlängerung weitgehend aufzulösen. Es ergeben sich für den Fahrer deutliche Vorteile im Sicherheitsbereich (Bremswegverkürzung und Fahrzeugstabilität) sowie im Komfortbereich (stark reduzierter Gegenlenkaufwand für Fahrer)

Ein Ausführungsbeispiel der Erfindung ist in den Zeichnungen dargestellt und wird im Folgenden näher beschrieben.

Es zeigen:

Fig. 1      eine schematische Darstellung der asymmetrischen Bremskräfte eines Fahrzeugs und des daraus resultierenden Störgiermoments bei einer $\mu$-*Split* Fahr- bahn

Fig. 2a      den Druckverlauf an der Vorderachse bei aktiver Giermomentbegrenzung nach dem Stand der Technik,

Fig. 2b      den Druckverlauf an der Hinterachse bei aktivem select low nach dem Stand der Technik,

Fig. 3      ein Blockschaltbild mit der Darstellung des Regel- systems mit Störgrößenaufschaltung und überlagerter Fahrzustandsregelung,

Fig. 4      ein Blockschaltbild mit der Darstellung der Stör- größenaufschaltung mit Schätzung des Störgiermo- ments,

Fig. 5      ein Blockschaltbild mit der Darstellung der über- lagerten Fahrzustandsregelung

Fig. 6      ein Blockschaltbild mit der Darstellung der Be- stimmung der Druckdifferenz an der Hinterachse aus dem fahrdynamischen Zustand des Fahrzeugs

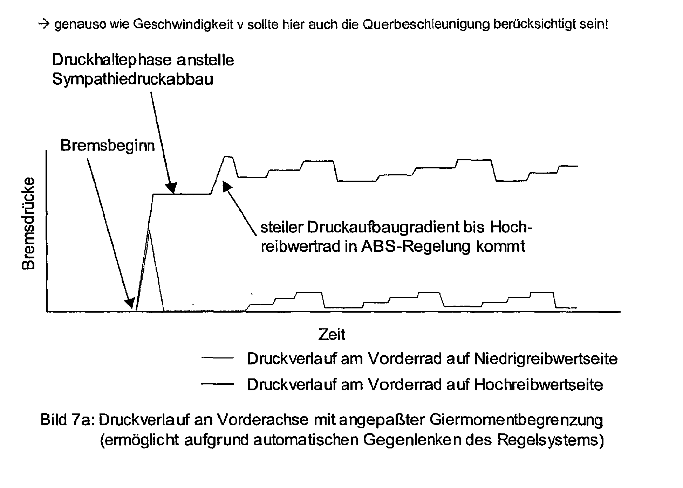

Fig. 7a      den Druckverlauf an der Vorderachse mit angepass- ter Giermomentbegrenzung nach der Erfindung

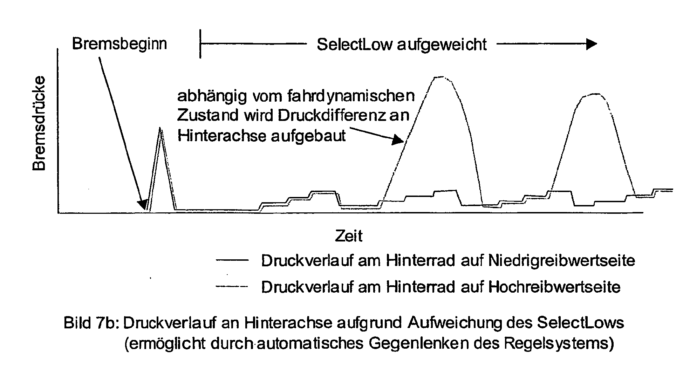

Fig. 7b      den Druckverlauf an der Hinterachse aufgrund der Modifizierung des SelectLows nach der Erfindung

Fig. 8      eine Darstellung der Fahrzeuggeometrie

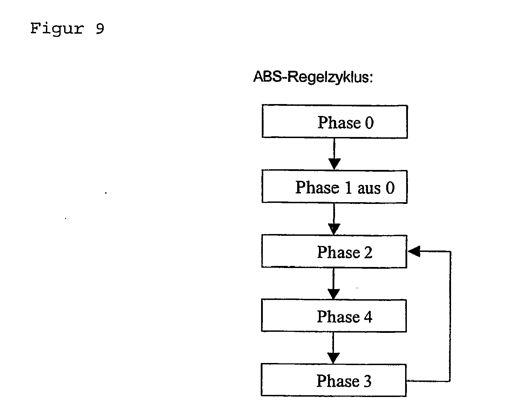

Fig. 9      eine Darstellung des ABS-Regelzyklus

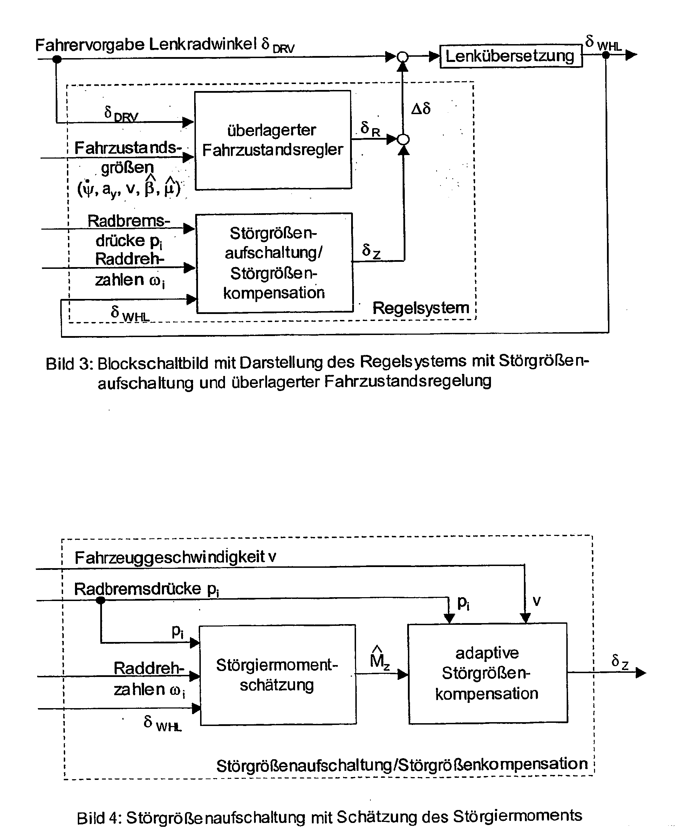

Die Bestimmung des für das automatische Gegenlenken notwendigen Radeinschlagwinkels wird von einer Recheneinheit 30 (Figur 3) ausgeführt, welche den Radeinschlagwinkel aus zwei Anteilen (Störgrößenaufschaltung und überlagerte Fahrzustandregelung) zusammensetzt.

Der erste Anteil ergibt sich mit Hilfe einer Störgrößenaufschaltung bzw. Störgrößenkompensation des während der Bremsung durch die asymmetrischen Bremskräfte hervorgerufenen Störgiermoments $\hat{M}_z$. Dieses Störgiermoment wird in einer in Figur 4 schematisch dargestellten Ermittlungseinheit 40 im wesentlichen zuerst aus den Bremsdruckinformationen der einzelnen Räder entsprechend den Gleichungen 1 und 2 auf den Seiten 28 und 29 geschätzt. Der Ermittlungseinheit werden hierzu als Eingangsgrößen die Radbremsdrücke $p_i$, die Raddrehzahlen $\omega_i$ und der rückgeführte Radeinschlagwinkel $\delta_{WHL}$ zugeführt. Zur Ermittlung der Radbremsdrücke ist ein elektronisches Bremssystem erforderlich, welches entweder die Bremsdrücke an den einzelnen Rädern modellbasiert schätzt bzw. beobachtet, die Bremsdrücke an den einzelnen Rädern mit Hilfe von Drucksensoren misst oder ein Brake-by-Wire System (EHB/EMB), welches auf diesen Größen basiert. Die Bestimmung des Störgiermoments beruht nach Gleichung 2 auf den Bremskräften $\hat{F}_{x,i}$ an den Rädern. Die Bremskräfte können, wie in Gleichung 1 angegeben, im wesentlichen aus den Bremsdruckinformationen berechnet werden oder es können auch Systeme zum Einsatz kommen, welche direkt die Bremskräfte messen (z.B. Seitenwandtorsionssensor, Radnaben, o.ä.). Aus dem geschätzten Störgiermoment, wird abhängig von Fahrzustandsgrößen (z.B. Fahrzeuggeschwindigkeit, Bremsdruckdifferenz zwischen Hoch- und Niedrigreibwert, mittleres Bremsdruckniveau, u.s.w.) adaptiv der zur Kompensation des Störgiermoments nötige Radeinschlagwinkel $\delta_z$ berechnet (Figur 4). Die Störgrößenaufschaltung agiert aus querdynamischer Sicht als reine Steuerung. Dies bewirkt, dass das Störgiermoment nicht in allen Fällen ideal kompensiert wird, da es sich mit anderen Störungen und Ungenauigkeiten überlagert, die nicht erfasst werden. Ungenauigkeiten können dabei zum Beispiel durch Veränderungen des Bremsscheibenreibwerts auftreten.

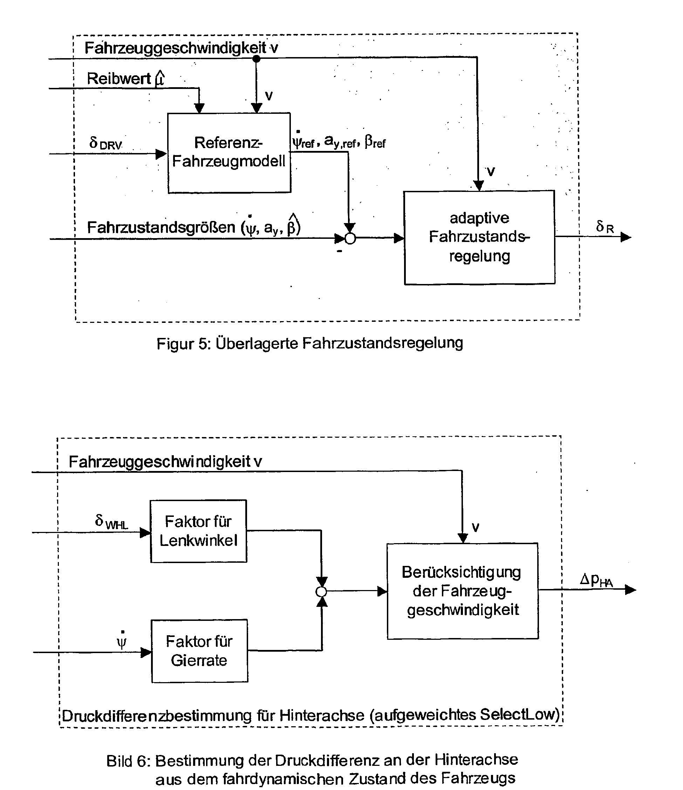

Daher wird der Störgrößenaufschaltung, wie in Figur 3 dargestellt, eine Fahrzustandsregelung 50 überlagert. Diese in Figur 5 dargestellte und später noch näher beschriebene Fahrzustandsregelung bestimmt, abhängig von Fahzustandgrößen, wie der Gierrate und optional zusätzlich auch von der Querbeschleunigung oder dem Schwimmwinkel des Fahrzeugs, einen zusätzlichen Radeinschlagwinkel $\delta_R$. Die Einrichtung 50 bzw.der Regler arbeitet adaptiv, d.h. abhängig von beispielsweise der Fahrzeuggeschwindigkeit v werden die Reglerverstärkungen der einzelnen zurückgeführten Fahrzustände angepasst.

Diese beiden Lenkwinkel-Stellanforderungen (aus Störgrößenaufschaltung und überlagerter Fahrzustandsregelung) werden bevorzugt in einem Addierer 31 addiert und vom aktiven Lenksystem in Form eines Radeinschlagwinkels $\delta_{WHL}$ eingestellt. Die Bestimmung des zur Stabilisierung benötigten Radeinschlagwinkels $\delta_{WHL}$ und das Einstellen des Radeinschlagwinkels geschieht dabei viel schneller als ein Durchschnittsfahrer die entsprechende Situation erkennen und per Gegenlenken darauf reagieren kann. Diese schnelle Reaktion des Regelsystems und des aktiven Lenksystems ermöglichen es, das elektronische Bremssystem ABS derart anzupassen, dass an den einzelnen Rädern (besonders auf der Hochreibwertseite) das Reibwertpotential besser ausgenutzt werden kann. Hierzu werden die Regelstrategien des ABS auf inhomogenen Reibwerten modifiziert:

Die Giermomentbegrenzung an der Vorderachse wird stark abgeschwächt, so dass sich an der Vorderachse schnell ein großer Druckunterschied zwischen dem Rad auf der Hoch- und dem der Niedrigreibwertseite aufbaut (hoher Druckaufbaugradient am Hochreibwertrad). Nahezu gleichzeitig zum Aufbau des Druckunterschieds entsteht ein Giermoment um die Fahrzeughochachse. Aufgrund der Schätzung des Störgiermoments aus der Bremsdruckinformation entsprechend den Gleichungen 1 und 2 (Seiten 28, 29) oder mit Hilfe von direkt die Reifenkräfte messenden Systemen wird vom Regelsystem sofort gegengelenkt, noch bevor der Fahrer die Situation am Gierverhalten des Fahrzeugs erkennen kann. Als zweite Maßnahme zur Erreichung einer besseren Bremsleistung wird auch das SelectLow modifiziert und zwar derart, dass auch an der Hinterachse eine Druckdifferenz zugelassen wird. Diese Druckdifferenz wird aber nicht zu jeder Zeit zugelassen, sondern abhängig vom Lenkwinkel, der Fahrzeuggeschwindigkeit und von Fahrzustandsgrößen begrenzt (Gleichung 3, Figur 6). Zeigt der Radeinschlagwinkel zur Niedrigreibwertseite und dreht sich das Fahrzeug in Richtung Niedrigreibwertseite, so wird eine Druckdifferenz an der Hinterachse zugelassen. Dadurch ergibt sich auf der Hochreibwertseite eine größere Bremskraft, das Störgiermoment vergrößert sich und gleichzeitig vermindert sich an diesem Rad das Seitenkraftpotential. Durch das größere Störgiermoment stoppt die Drehung in Richtung Niedrigreibwertseite und das Fahrzeug beginnt eine Drehung in Richtung Hochreibwertseite. Durch das Drehen in Richtung Hochreibwertseite verringert sich gleichzeitig wieder die zugelassene Druckdifferenz an der Hinterachse und somit die Bremskraft auf der Hochreibwertseite, was wiederum zu mehr Seitenkraftpotential am Hinterrad auf der Hochreibwertseite führt. Hierdurch und durch die überlagerten Lenkeingriffe des Regelsystems im Zusammenspiel mit dem aktiven Lenksystem wird das Fahrzeug stabilisiert. Der Fahrer kann aber trotzdem, je nach seinen Lenkvorgaben in Richtung Hoch- oder Niedrigreibwertseite fahren. Damit am Hinterrad auf der Hochreibwertseite nicht zu viel Seitenkraftpotential verloren gehen kann, wird die durch die fahrdynamische Aufweichung des SelectLow's zugelassene Druckdifferenz an der Hinterachse auf eine Maximaldruckdifferenz begrenzt. Bei hoher Geschwindigkeit oder steigender Querbeschleunigung kann diese maximal zulässige Druckdifferenz an der Hinterachse bis auf null (entspricht SelectLow) reduziert werden.

Diese Modifikationen in der ABS-Regelstrategie (sowohl hoher Druckaufbaugradient bei der Giermomentbegrenzung an der Vorderachse, sowie das je nach Fahrzustand aufgeweichte SelectLow an der Hinterachse) bewirken eine wesentlich verbesserte Ausnutzung des zur Verfügung stehenden Reibwertpotentials. Hierdurch lässt sich eine signifikante Bremswegverkürzung erzielen.

Bei Ausfall des aktiven Lenksystems wird auf die herkömmliche ABS-Regelstrategie zurückgegriffen (Giermomentbegrenzung und SelectLow).

Das Lenkwinkel-Korrektursystem arbeitet wie folgt:

Die Aktivierung des Verfahrens zur Kompensations-Lenkwinkelkorrektur wird in Abhängigkeit von einer erkannten $\mu$-Split Situation freigegeben. Die Erkennung einer $\mu$-Split Fahrsituation basiert nach einem vorteilhaften Ausführungsbeispiel auf folgenden Sensorsignalen:

- Bremslichtschaltersignal (BLS)
- Drucksensorsignal des Tandemhauptzylinders (THZ)
- Drucksensorsignale der Radbremskreis
- Raddrehzahlsensoren
- Gierratesensor(en)
- Querbeschleunigungssensor(en)
- interner ESP-Status (ESP-Signale bezüglich ESP-Eingriffe)

Mittels Gierrate und Querbeschleunigung wird zwischen einer Geradeausfahrt und einer Kurvenfahrt (Rechts- oder Linkskurve) unterschieden. Dabei müssen in Abhängigkeit von der Geradeausfahrt oder Kurvenfahrt folgende Signale vorliegen, um die Kompensations-Lenkwinkelkorrektur zu aktivieren:

Die Fahrsituation $\mu$-Split wird bei Geradeausfahrt wie folgt erkannt:

Bremslichtschalter (BLS)-Signal liegt vor, BLS-Sensor ist in Ordnung, Bremsung durch Fahrer wird mittels THZ-Druck erkannt und Vorwärtsfahrt wurde erkannt und mindestens ein Vorderrad ist in der ABS-Regelung

oder wenn nach Überschreitung eines ersten zeitabhängigen Grenzwertes ein Vorderrad in der ABS-Regelung ist und das andere Vorderrad nicht in der ABS-Regelung ist oder wenn beide Vorderräder im ersten ABS-Zyklus sind und die Druckdifferenz an der Vorderachse größer als ein erster druckabhängiger Grenzwert ist oder wenn nach Überschreitung eines zweiten zeitabhängigen Grenzwertes beide Vorderräder in der ABS-Regelung sind und mindestens ein Vorderrad einen ABS-Blockierdruck von größer als einen zweiten druckabhängigen Grenzwert aufweist und der ABS-Blockierdruck an einem Vorderrad mindestens das x-fache des Blockierdrucks des anderen Vorderrads ist

Eine bereits erkannte Fahrsituation μ-Split bei Geradeausfahrt wird wie folgt zurückgesetzt:

Es ist kein Vorderrad in der ABS-Regelung oder es liegt kein BLS-Signal vor oder der BLS-Sensor ist defekt oder die Bremsung durch Fahrer wird nicht erkannt -

oder es liegt ein BLS-Signal vor und der BLS-Sensor ist in Ordnung und die Bremsung durch den Fahrer wird erkannt und nach Überschreitung eines zeitabhängigen Grenzwerts ist der ABS-Blockierdruck an beiden Vorderrädern kleiner als ein druckabhängiger Grenzwert oder der ABS-Blockierdruck an einem Vorderrad ist nicht mehr mindestens das x-fache des Blockierdrucks des anderen Vorderrads.

Die Fahrsituation μ-Split wird bei Kurvenfahrt wie folgt erkannt:

Das BLS-Signal liegt vor und der BLS-Sensor ist in Ordnung und die Bremsung durch Fahrer wird mittels THZ-Druck erkannt und Vorwärtsfahrt wurde erkannt und und mindestens ein Vorderrad ist in der ABS-Regelung und

das kurvenäußere Vorderrad kommt zeitlich vor dem kurveninneren Vorderrad in ABS-Regelung
oder

wenn für länger als eine vorgegebene Zeitdauer beide Vorderräder in der ABS-Regelung sind und mindestens ein Vorderrad einen ABS-Blockierdruck von mehr als einen Grenzdruck aufweist und der ABS-Blockierdruck am kurveninneren Vorderrad mindestens das x-fache des Blockierdrucks des kurvenäußeren Vorderrads ist

Eine bereits erkannte Fahrsituation μ-Split bei Kurvenfahrt wird wie folgt zurückgesetzt:

Es ist kein Vorderrad in der ABS-Regelung oder es liegt kein BLS-Signal vor oder der BLS-Sensor ist defekt oder die Bremsung durch Fahrer wird nicht erkannt

oder das BLS-Signal liegt vor und der BLS-Sensor ist in Ordnung und die Bremsung durch Fahrer wird erkannt und für länger als eine vorgegebene Zeitdauer ist der ABS-Blockierdruck an beiden Vorderrädern kleiner als ein Grenzbremsdruck oder der ABS-Blockierdruck am kurveninneren Vorderrad ist nicht mehr mindestens das x-fache des Blockierdrucks des kurvenäußeren Vorderrads.

**Kompensations-Lenkanforderung**

Zur Aktivierung der Kompensations-Lenkanforderung muss zuvor die Fahrsituation μ-Split erkannt sein und die Kompensations-Lenkanforderung muss aktiviert worden sein, so wie vorstehend beschrieben. Die Lenkwinkelanforderung $\Delta\delta$ basiert auf zwei Anteilen: Der erste Anteil $\Delta\delta_z$ bestimmt sich mittels der Störgrößenkompensation (Steueranteil), die das wirkende Störgiermoment kompensiert. Diesem Steueranteil ist ein, auf dem Gierverhalten des Fahrzeugs basierender, Regelanteil $\Delta\delta_R$ überlagert. Die beiden nachfolgend beschriebenen Anteile (Steuer- und Regelanteil) werden addiert und ergeben die gesamte Lenkanforderung $\Delta\delta$ zu

$$\Delta\delta = \Delta\delta_z + \Delta\delta_{R.}\cdot$$

Die Lenkanforderung basiert auf folgenden Sensorsignalen:

- Drucksensorsignalen in jedem Radbremskreis
- Gierratensignalen
- Sollenkwinkelsignalen "Fahrerlenkwinkelwunsch"
- Summenlenkwinkelsignalen am Rad
- Raddrehzahlsensorsignalen

- Querbeschleunigungssignalen
- BLS-Signalen
- Drucksensorsignalen des THZ
- ESP-Status (ESP-Eingriffe)
- ESP-Status (Eispurmodell-Reset)

## Steueranteil (Störgrößenkompensation)

Der Steueranteil der Lenkanforderung entspricht einer Störgrößen-Kompensation. Dabei wird das als Störgröße wirkende Störgiermoment $M_z$, welches aus den asymmetrischen Bremskräften herrührt, durch direkte Rückführung über die Kompensationsverstärkung $K_{FFW}(\overline{p}_{FA}, v)$ weitgehend kompensiert. Das geschätzte Störgiermoment ist dabei die direkte Eingangsgröße für die Zusatzlenkwinkelanforderung $\Delta\delta_z$ des Steueranteils (FFW = Feed Forward Control). Es gilt die Beziehung

$$\Delta\delta_Z = K_{FFW}\left(\overline{p}_{FA}, v\right) \cdot M_z \; .$$

Das Störgiermoment wird mit Hilfe der kinematischen Starrkörperbeziehungen aus den Bremskräften der einzelnen Räder und dem Radeinschlagswinkel der Vorderräder geschätzt. Die statischen Bremskräfte der einzelnen Räder werden aus den ABS-Blockierdrücken der einzelnen Räder und den Dimensionen der Radbremse bestimmt. Zur Berechnung der dynamischen Bremskräfte müssen zusätzlich noch die Radbeschleunigungen berücksichtigt werden. Die Bestimmung der ABS-Blockierdrücke wird später beschrieben.

Der Kompensationsverstärkungsfaktor $K_{FFW}(\overline{p}_{FA}, v)$ wird über dem mittleren Bremsdruck an der Vorderachse adaptiert. Wenn beide Vorderräder in der ABS-Regelung sind, entspricht der mittlere Bremsdruck der Vorderachse dem insgesamt (linke und rechte Fahrzeugseite gemittelt) zur Verfügung stehenden Reibwertpotential. Dieses Reibwertpotential hat wiederum auf den mit der aktiven Lenkung einzustellenden Kompensations-lenkwinkel Einfluss.

Die Zusatzlenkwinkelanforderung $\Delta\delta_z$ wird bei kleinen Fahrgeschwindigkeiten (zwischen 10 und 2 km/h) linear bis auf $\Delta\delta_z = 0$ ausgefadet.

Zusammenfassung Steueranteil:

Der Lenkanteil basierend auf der Störgrößenkompensation ist im wesentlichen vom Radeinschlagwinkel der Vorderräder und von den ABS-Blockierdrücken, welche wie später beschrieben, im wesentlichen auf den Drucksensorsignalen und den ABS-Phaseninformationen (bestimmt aus den Raddrehzahlsensorsignalen) basieren, abhängig.

## Regelanteil

Der auf dem Gierverhalten des Fahrzeugs basierende Regelanteil $\Delta\delta_R$ der Lenkanforderung besteht aus einem P-Anteil $\Delta\delta_{R,P}$ (Regelgröße Gierratenabweichung) und einem D-Anteil $\Delta\delta_{R,D}$ (Regelgröße Gierbeschleunigungsabweichung). Die nachfolgend beschriebenen P- und D-Anteile addieren sich zum gesamten Regelanteil $\Delta\delta_R$ wie folgt

$$\Delta\delta_R = \Delta\delta_{R,P} + \Delta\delta_{R,D}.$$

## P-Anteil (Gierratenabweichung)

Die Regelgröße für den P-Anteil ist die Gierratenabweichung $\Delta\dot{\psi}$. Für den aus dem P-Anteil resultierenden Lenkanforderungsanteil gilt das Regelgesetz

$$\Delta\delta_{R,P} = K_{FB,P}\left(v\right) \cdot \Delta\dot{\psi}.$$

Die Gierratenabweichung $\Delta\dot{\psi}$ ist als Differenz von gemessener Gierrate des Fahrzeugs $\dot{\psi}_{ist}$ und der aus dem Fahrerrichtungswunsch (Fahrerlenkwinkel inklusive variabler Lenkübersetzung) bestimmten Referenzgierrate des Fahrzeugs $\dot{\psi}_{ref}$ (Einspurmodell) definiert und ergibt sich somit zu

$$\Delta\dot{\psi} = \dot{\psi}_{ist} - \dot{\psi}_{ref}.$$

Die Ist-Gierrate des Fahrzeugs $\dot{\psi}_{ist}$ wird direkt mit einem Gierratensensor gemessen. Der Gierratensensor ist mit einem Querbeschleunigungssensor in einem Sensorcluster, in welchem sowohl die Gierrate sowie auch die Querbeschleunigung mit redundanten Sensorelementen gemessen werden.

Die Referenzgierrate des Fahrzeugs $\dot{\psi}_{ref}$ wird mit Hilfe eines Einspurmodells des Fahrzeugs bestimmt. Die wichtigsten Eingangsgrößen für das Einspurmodell sind der Fahrerrichtungswunsch (Fahrerlenkwinkel inklusive variabler Lenkübersetzungsanteile) und die Fahrzeuggeschwindigkeit. Der aktuelle Reibwert der Fahrbahn wird mit Hilfe der gemessenen Querbeschleunigung bestimmt und das sich daraus ergebende Reibwertpotential wird im Einspurmodell bei der Berechnung der Referenzgierrate berücksichtigt.

Der Verstärkungsfaktor $K_{FB,P}(v)$ für die Reglerrückführung der Gierratenabweichung $\Delta\dot{\psi}$ wird über der aktuellen Fahrzeuggeschwindigkeit v adaptiert. Da die Fahrzeuggeschwindigkeit das Fahrverhalten des Fahrzeugs wesentlich beeinflusst wird dies in der Reglerverstärkung und somit auch im über den Regler geschlossenen Regelkreis des Fahrzeugs berücksichtigt.

**D-Anteil (Gierbeschleunigungsabweichung)**

Die Regelgröße für den D-Anteil ist die Gierbeschleunigungsabweichung $\Delta\ddot{\psi}$. Für den aus dem D-Anteil resultierenden Lenkanforderungsanteil gilt das Regelgesetz

$$\Delta\delta_{R,D} = K_{FB,D}(v) \cdot \Delta\ddot{\psi}.$$

Die Gierbeschleunigungsabweichung $\Delta\ddot{\psi}$ wird durch Differentiation der Gierratenabweichung $\Delta\dot{\psi}$ ermittelt

$$\Delta\ddot{\psi} = \frac{d}{dt}\Delta\dot{\psi} = \frac{d}{dt}\left(\dot{\psi}_{ist} - \dot{\psi}_{ref}\right)$$

Die Gierbeschleunigungsabweichung basiert somit auf den gleichen Signalquellen wie die Gierratenabweichung: Gemessene Ist-Gierrate des Fahrzeugs $\dot{\psi}_{ist}$ und der Referenzgierrate des Fahrzeugs $\dot{\psi}_{ref}$ die ihrerseits unmittelbar vom Fahrerrichtungswunsch (Fahrerlenkwinkel inklusive variabler Lenk-übersetzungsanteile) und der Fahrzeuggeschwindigkeit abhängt. (Berücksichtigung des aktuellen Reibwerts der Fahrbahn mittels gemessener Querbeschleunigung).

Der Verstärkungsfaktor $K_{FB,D}(v)$ für die Reglerrückführung der Gierbeschleunigungsabweichung $\Delta\ddot{\psi}$ wird über der aktuellen Fahrzeuggeschwindigkeit adaptiert. Da die Fahrzeuggeschwindigkeit das Fahrverhalten des Fahrzeugs wesentlich beeinflusst wird dies in der Reglerverstärkung und somit auch im über den Regler geschlossenen Regelkreis des Fahrzeugs berücksichtigt.

**Zusammenfassung Regelanteil**

Der Regelanteil $\Delta\delta_R$ basiert im wesentlichen auf dem Signal des Gierratensensors $\dot{\psi}$, des Fahrerwunschlenkwinkels $\delta_{DRV}$ inklusive variabler Lenkübersetzung und der Fahrzeuggeschwindigkeit v, die ihrerseits auf den Signalen der Raddrehzahlsensoren basiert.

**Berechnung des ABS-Blockierdrucks**

Als ABS-Blockierdruck wird der Bremsdruck am Rad bezeichnet, bei dem das Rad zum blockieren neigt. Ist der Reibwert während einer ABS-Bremsung annähernd homogen, so pendelt der Bremsdruck am Rad immer um den ABS-Blockierdruck. Die Ermittlung des ABS-Blockierdrucks geschieht für jedes Rad individuell wie folgt:

Wenn das Rad nicht im ersten ABS-Regelzyklus ist und vom ABS erkannt wird, dass das Rad instabil ist und somit zum Blockieren neigt (ABS-Phase 2) und wenn das Rad in der Regel-Loop davor nicht auch schon in Phase 2 oder Phase 4 war, dann werden mindestens 85%, vorzugsweise 95% des aktuellen Raddrucks als ABS-Blockierdruck des Rads eingefroren. Ist das Rad weder in der ABS-Regelung oder im ersten ABS-Regelzyklus, so wird anstelle des ABS-Blockierdrucks der Raddruck verwendet. Wenn das Rad in der ABS-Regelung ist, aber nicht in Phase 2 ist, so wird das Maximum aus dem letztem ABS-Blockierdruck und 95% des Raddrucks verwendet, da bei Druckaufbauphasen der Raddruck größer werden kann, als der letzte ABS-Blockierdruck. Wenn ein Rad für länger als eine Zeidauer im Bereich zwischen 90 und 110 ms instabil ist (Phase 2), so wird nicht weiter der ABS-Blockierdruck verwendet, sondern der Raddruck, da sich der Raddruck durch die anhaltende Druckabbauphase viel zu weit vom ABS-Blockierdruck entfernt hat.

Ist der Raddruck weniger als 50% des letzten ABS-Blockierdrucks oder beträgt der Bremsschlupf des Rads mehr als 50%, so wird auch auf den Raddruck zurückgegriffen (Erkennung eines Reibwertübergangs von Hochreibwert zu Niedrigreibwert).

Wenn an dem Rad ein ESP-Eingriff stattfindet, wird der ABS-Blockierdruck nicht mitgeführt, sondern konstant gehalten.

Wenn der Fahrer nicht mehr bremst, so werden die ABS-Blockierdrücke auf null zurückgesetzt.

Zusammenfassung:

Die Bestimmung des Blockierdrucks basiert im wesentlichen auf den Drucksensorsignalen und die benötigte ABS-Phaseninformation basiert im wesentlichen den Raddrehzahlsensoren.

ABS-Phaseninformationen und ABS-Regelzyklus:

| ABS-Phase | Zustand des Rads | ABS-Aktion |
|---|---|---|
| Phase 0 | keine ABS-Regelung | ungepulster Druckaufbau |
| Phase 1 aus 0 | keine ABS-Regelung, leichte Raddynamik | gepulster Druckaufbau |
| Phase 2 | Rad instabil, tiefer Schlupfeinlauf am Rad | Druckabbau |
| Phase 4 | Rad instabil, Rad läuft aus dem Schlupf | Druck halten, gepulster Druckaufbau |
| Phase 3 | Rad stabil, wenig Schlupf am Rad | gepulster Druckaufbau |
| Phase 1 aus 3 | Rad zeigt leichte Dynamik | Druck halten |
| Phase 5 aus 0 | Rad dreht über | ungepulster Druckaufbau |
| Phase 5 aus 3 | Rad dreht über | ungepulster Druckaufbau |

**Gleichungen:**

1. Schätzung der Bremskräfte aus den Bremsdrücken:

Bilanzgleichung eines Rads bei Vernachlässigung von Antriebsmoment und unter der Annahme, daß die Radaufstandskraft im Radaufstandspunkt angreift

$$J_{Whl}\dot{\omega}_i = M_{br,i} + F_{x,i}r_{Whl}.$$

Daraus ergibt sich mit dem Bremsmoment $M_{br,i} = B^*p_i$ für die Schätzung der Umfangskraft $\hat{F}_{x,i}$ aus Bremsdruck und Radbeschleunigung

$$\hat{F}_{x,i} = \frac{1}{r}B^* p_i + \frac{1}{r}J_{Whl}\dot{\omega}_i.$$

Bei geringeren Genauigkeitsanforderungen kann der dynamische Anteil $\frac{1}{r} J_{Whl} \dot{\omega}_i$ vernachlässigt werden und stationär ergibt sich für die Bremskraft der Zusammenhang

$$\hat{F}_{x,i} = \frac{1}{r} B^* p_i.$$

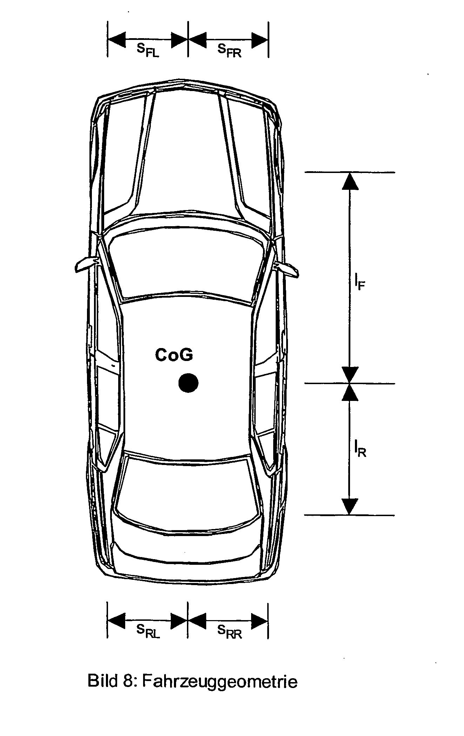

2. Schätzung des Störgiermoments aus den Bremskräften Das Störgiermoment ergibt sich für Fahrzeuge mit Vorderradlenkung mit dem Radeinschlagswinkel $\delta$ und der Fahrzeuggeometrie nach Abbildung 8 zu

$$\hat{M}_z = \cos(\delta)\left[\hat{F}_{FL}s_{FL} - \hat{F}_{FR}s_{FR}\right] - \sin(\delta)\left[\hat{F}_{FL}l_F + \hat{F}_{FR}l_F\right] + \hat{F}_{RL}s_{RL} - \hat{F}_{RR}s_{RR}.$$

3. SelectLow:

An der Hinterachse wird abhängig vom fahrdynamischen Zustand eine Druckdifferenz zugelassen. Für die zugelassene Druckdifferenz an der Hinterachse gilt

$$\Delta p_{HA} = f\left(\dot{\psi}, \delta_{Whl}, v, a_y\right)$$

**Patentansprüche**

1. Verfahren zum Erhöhen der Fahrstabilität eines Fahrzeugs bei gebremster Fahrt, bei dem anhand von mehreren Eingangsgrößen Kompensations-Lenkwinkel für ein regelbares und/oder steuerbares Lenksystem ermittelt werden, so dass durch Lenkeingriffe die Fahrstabilität des Fahrzeugs erhöht wird, **gekennzeichnet durch** die Schritte Ermitteln eines ersten Störgrößen-Kompensationsanteils der Kompensations-Lenkwinkelanforderung $\Delta\delta_{GMK}$ unter Einbeziehung von Bremskraft-Differenzen an den gebremsten Rädern, Ermitteln eines zweiten Störgrößen-Kompensationsanteils aus dem Fahrzustand bzw. Bahnverlauf des Fahrzeugs und Modifizieren des Lenkwinkels in Abhängigkeit von den Störgrößen-Kompensationsanteilen, wobei der erste und zweite Störgrößen-Kompensationsanteil in einem Addierer addiert und der Regelung bzw. Steuerung zur Lenkungskorrektur des vom Fahrer vorgegebenen Lenkwinkels zur Verfügung gestellt werden.

2. Verfahren nach Anspruch 1, **dadurch gekennzeichnet, dass** der zweite Kompensationsanteil in einer Vorrichtung ermittelt wird, die eine Referenz-Fahrzeugmodellschaltung aufweist, in der die zur Festlegung des Bahnverlaufs erforderlichen Eingangsgrößen, wie Fahrzeuggeschwindigkeit, Lenkwinkel, ggf. Reibwert eingegeben werden, welche aufgrund eines in der Referenz-Fahrzeugmodellschaltung befindlichen, die Eigenschaften des Fahrzeugs nachbildenden Fahrzeugmodells einen Sollwert für eine Regelgröße bestimmt und bei der dieser Sollwert in einem Vergleicher mit einem gemessenen Wert für diese Regelgröße verglichen wird, wobei in einem Fahrzustandsregler der zweite Kompensationsanteil des Lenkwinkels $\Delta\delta_R$ aus dem Vergleichswert (Regelgröße) berechnet wird.

3. Verfahren nach Anspruch 2, **dadurch gekennzeichnet, dass** die Gierwinkelgeschwindigkeit und/oder die Querbeschleunigung und/oder der Schwimmwinkel als Sollwert für die Regelgröße bestimmt wird.

4. Verfahren nach einem der Ansprüche 1 bis 3, **dadurch gekennzeichnet, dass** der erste Kompensationsanteil $\Delta\delta_Z$ unter Einbeziehung eines auf Basis unterschiedlicher Bremskräfte ermittelten Störgiermoments $M_z$ bestimmt wird und der zweite Anteil $\Delta\delta_R$ unter Einbeziehung des Fahrzeuggierverhaltens ermittelt wird.

5. Verfahren nach einem der Ansprüche 1 bis 4, **dadurch gekennzeichnet, dass** der erste Kompensationsanteil als Steueranteil und der zweite Kompensationsanteil als Regelanteil vorgesehen sind.

6. Verfahren nach einem der Ansprüche 1 oder 5, **dadurch gekennzeichnet, dass** das Störgiermoment $M_z$ durch eine logische Verknüpfung der Radeinschlagwinkel der gelenkten Räder, den Bremsdrücken und dem Drehverhalten der Räder ermittelt wird.

**7.** Verfahren nach Anspruch 6, **dadurch gekennzeichnet, dass** die Bremskräfte aus den Bremsdrücken nach der Beziehung

$$\hat{F}_{x,i} = f\{r, B, p_i, J_{Whl}, \dot{\omega}_i\}$$

mit
$\hat{F}_{x,i}$ = Bremskraft an einem Rad i
r = dynamischer Reifenradius
B = Bremsenkennwert
$p_i$ = Radbremsdruck
$J_{Whl}$ = Trägheitsmoment des Rades
$\dot{\omega}_i$ = Drehbeschleunigung eines Rades i
oder

$$\hat{F}_{x,i} = f\{r, B, p_i\}$$

ermittelt wird.

**8.** Verfahren nach Anspruch 7, **dadurch gekennzeichnet, dass** das Störgiermoment nach der Beziehung

$$\hat{M}_z = f\left\{\hat{F}_{FL}, s_{FL}, \hat{F}_{FR}, s_{FR}, l_F, \hat{F}_{RL}, s_{RL}, \hat{F}_{RR}, s_{RR}, \delta\right\}$$

mit
$\hat{F}_{FL}$ = Bremskraft vorne links
$s_{FL}$ = halbe Spurweite des Vorderrades links
$\hat{F}_{FR}$ = Bremskraft vorne rechts
$s_{FR}$ = halbe Spurweite des Vorderrades rechts
$l_F$ = Abstand der Vorderachse vom Schwerpunkt
$\hat{F}_{RL}$ = Bremskraft h int en links
$s_{RL}$ = halbe Spurweite des Hinterrades links
$\hat{F}_{RR}$ = Bremskraft h int en rechts
$s_{RR}$ = halbe Spurweite des H int errades rechts
$\delta$ = Radeinschlagswinkel der gelenkten Räder
ermittelt wird.

**9.** Verfahren nach einem der Ansprüche 1 bis 8, **dadurch gekennzeichnet, dass** die Kompensationsverstärkungen $K_{FFW}$ der einzelnen, zurückgeführten Regelgrößen in Abhängigkeit vom Fahrverhalten des Fahrzeugs und ggf. den Umgebungsbedingungen angepasst werden.

**10.** Verfahren nach einem der Ansprüche 1 bis 9, **dadurch gekennzeichnet, dass** der zweite Kompensationsanteil $\Delta\delta_R$ der Lenkwinkelanforderung $\Delta\delta$ aus einem auf der Gierratenabweichung $\Delta\dot{\psi}$ beruhenden P-Anteil $\Delta\delta_{R,P}$ und aus einem auf der Gierbeschleunigungsabweichung $\Delta\ddot{\psi}$ beruhenden D-Anteil $\Delta\delta_{R,D}$ ermittelt wird.

**11.** Verfahren nach Anspruch 10, **dadurch** ge-kennzeichnet, dass der P-Anteil nach der Beziehung

$$\Delta\delta_{R,P} = K_{FB,P}(v) * \Delta\dot{\psi}$$

ermittelt wird.

**12.** Verfahren nach einem der Ansprüche 10 bis 11, **dadurch gekennzeichnet, dass** der Verstärkungsfaktor $K_{FB,P}(v)$ für die Rückführung der Regelgröße Gierratenabweichung $\Delta\dot{\psi}$ in Abhängigkeit von der Fahrzeuggeschwindigkeit erfolgt.

**13.** Verfahren nach einem der Ansprüche 10 bis 12, **dadurch gekennzeichnet, dass** der D-Anteil nach der Beziehung

$$\delta_{R,D} = K_{FB,D}(v) * \Delta\ddot{\psi}$$

ermittelt wird.

**14.** Verfahren nach einem der Ansprüche 10 bis 13, **dadurch gekennzeichnet, dass** der Verstärkungsfaktor $K_{FB,D}(v)$ für die Rückführung der Regelgröße Gierbeschleunigungsabweichung $\Delta\ddot{\psi}$ in Abhängigkeit von der Fahrzeuggeschwindigkeit v erfolgt.

**15.** ABS Regelverfahren, wobei ein durch Bremsvorgänge mit unterschiedlichen Bremsdrücken bzw. -kräften an den einzelnen Rädern hervorgerufenes Gierverhalten, das aus dem ermittelten Bremskraft-Unterschied bestimmt wird, durch einen Eingriff in ein steuerbares bzw. regelbares Lenksystem des Fahrzeugs zumindest teilkompensiert wird **gekennzeichnet durch** ein Verfahren nach einem der Ansprüche 1 bis 14.

**16.** ABS Regelverfahren nach Anspruch 15, **dadurch gekennzeichnet, dass** ein Fahrzustand mit einem durch unterschiedliche Bremsdrücke bzw. -kräfte hervorgerufenen Gierverhalten ermittelt und Lenkeingriffe zugelassen werden, wenn mindestens die folgenden Bedingungen bei erkannter Geradeausfahrt oder Kurvenfahrt erfüllt sind:

a) Bremslichtschalter-Signal vorhanden und
b) Bremslichtschalter-Sensor in Ordnung und
c) Bremsung durch Fahrer erkannt mittels THZ-Druck und
d) Vorwärtsfahrt erkannt.

**17.** ABS Regelverfahren nach Anspruch 15 oder 16, **dadurch gekennzeichnet, dass** bei erkannter Geradeausfahrt, mindestens eine der weiteren, folgenden Bedingungen erfüllt ist:

e1) wenn für einen bestimmten Zeitraum ein Vorderrad in der ABS-Regelung ist und das andere Vorderrad nicht in der ABS-Regelung ist oder
e2) wenn beide Vorderräder im ersten ABS-Zyklus sind und die Druckdifferenz an der Vorderachse größer als ein Grenzwert ist oder
e3) wenn für einen bestimmten Zeitraum beide Vorderräder in ABS-Regelung sind und mindestens ein Vorderrad einen bestimmten Mindest-ABS-Blockierdruck aufweist und der eine Blockierdruck um mehr als einen Grenzwert den Blockierdruck des anderen Rads überschreitet.

**18.** ABS Regelverfahren nach Anspruch 16 oder 17, **dadurch gekennzeichnet, dass** bei erkannter Kurvenfahrt mindestens eine der weiteren folgenden Bedingungen erfüllt ist:

e1) das kurvenäußere Vorderrad zeitlich vor dem kurveninneren Vorderrad in die ABS-Regelung kommt oder wenn für einem Zeitraum
e2) beide Vorderräder in der ABS-Regelung sind und mindestens ein Vorderrad einen bestimmten Mindest-ABS-Blockierdruck aufweist und der Blockierdruck des kurveninneren Rads um mehr als einen bestimmten Grenzwert über dem Blockierdruck des kurvenäußeren Rads liegt.

**19.** ABS Regelverfahren nach einem der Ansprüche 16 bis 18, **dadurch gekennzeichnet, dass** mindestens eine der folgenden Forderungen erfüllt sein muss, damit die Lenkeingriffe beendet werden:

a) kein Vorderrad ist in der ABS-Regelung oder
b) es liegt keine Bremslichtschalter-Signal vor oder
c) der Bremslichtschalter-Sensor ist defekt oder

d)die Bremsung durch Fahrer wird nicht erkannt (kein THZ-Druck vorhanden).

20. ABS Bremsdruckregelung mit Einzelradregelung wenigstens an einer Fahrzeugachse, bei dem aufgrund von unterschiedlichem Reibwert auf den beiden Fahrzeugseiten ein bei der ABS Regelung auftretendes Gierverhalten zumindest teilweise **dadurch** kompensiert wird, dass ein Kompensationslenkwinkel ermittelt und dem Fahrzeuglenkwinkel unter Verwendung der Verfahren nach einem der Ansprüche 1 bis 19 überlagert wird, **gekennzeichnet durch** die Schritte Zulassen von hohen Druckaufbaugradienten am Hochreibwertrad Zulassen von Druckunterschieden an der Hinterachse nach der Beziehung $\Delta p_{HA}$=f($\dot{\psi}$,$\delta_{Whl}$,$v$,$a_y$), mit $\dot{\psi}$= Gierrate, $\delta_{Whl}$ = Radeinschlagwinkel, $v$ = Fahrzeuggeschwindigkeit, $a_y$ =Querbeschleunigung.

21. ABS Bremsdruckregelung nach Anspruch 20, **dadurch gekennzeichnet, dass** bei Ausfall des steuerbaren bzw. regelbaren Lenksystems auf die herkömmliche ABS Regelstrategie zurückgegriffen wird.

22. Fahrdynamikregler mit mindestens einer ESP und einer ABS Funktion, die mit einem Regler und/oder einer Steuerung zur Lenkungskorrektur verbunden sind, **gekennzeichnet durch** eine erste Ermittlungseinheit zum Ermitteln des vom Fahrer vorgegebenen Lenkwinkels, eine zweite Ermittlungseinheit zum Ermitteln eines Störgrößenkompensations-Lenkwinkels auf der Basis von Bremskräften, eine dritte Einrichtung zum Ermitteln eines Störgrößenkompensations-Lenkwinkels auf der Basis des Fahrzeug-Gierverhaltens und eine Logikeinheit zum Verknüpfen der ersten und zweiten Störgrößenkompensations-Lenkwinkel zu einer Kompensations-Lenkwinkelanforderung.

**Claims**

1. Method for increasing the driving stability of a vehicle during braked driving, in the case of which a plurality of input variables are used to determine compensation steering angles for a steering system which can be regulated and/or controlled so that the driving stability of the vehicle is increased by steering interventions, **characterized by** the steps of:

   determining a first interference variable compensation component of the compensation steering angle requirement $\Delta\delta_{GMK}$ with the inclusion of braking force differences at the braked wheels,
   determining a second interference variable compensation component from the driving state and/or carriageway profile of the vehicle, and
   modifying the steering angle as a function of the interference variable compensation components, the first and second interference variable compensation components being added in an adder, and the regulation and/or control being made available for the steering correction of the steering angle prescribed by the driver.

2. Method according to Claim 1, **characterized in that** the second compensation component is determined in a device which has a reference vehicle model circuit, in which the input variables necessary for defining the carriageway profile, such as vehicle speed, steering angle, and, if appropriate, friction coefficient, are input, which determines a desired value for a controlled variable on the basis of a vehicle model that is located in the reference vehicle model circuit and simulates the properties of the vehicle, and in the case of which this desired value is compared in a comparator with a measured value for this controlled variable, the second compensation component of the steering angle $\Delta\delta_R$ being calculated in a driving state regulator from the comparison value (controlled variable).

3. Method according to Claim 2, **characterized in that** the yaw angle speed and/or the lateral acceleration and/or the attitude angle is determined as desired value for the controlled variable.

4. Method according to one of Claims 1 to 3, **characterized in that** the first compensation component $\Delta\delta_Z$ is determined with the inclusion of an interference yaw torque $M_z$ determined on the basis of different braking forces, and the second component $\Delta\delta_R$ is determined with the inclusion of the vehicle yaw behaviour.

5. Method according to one of Claims 1 to 4, **characterized in that** the first compensation component is provided as an open-loop control component, and the second compensation component is provided as a closed-loop control component.

**6.** Method according to either of Claims 1 and 5, **characterized in that** the interference yaw torque $M_z$ is determined by a logic combination of the wheel lock angles of the steered wheels, the brake pressures and the rotational behaviour of the wheels.

**7.** Method according to Claim 6, **characterized in that** the braking forces are determined from the brake pressures according to the relationship

$$\hat{F}_{x,i} = f\{r, B, p_i, J_{Whl}, \dot{\omega}_i\}$$,

where
$\hat{F}_{x,i}$ = braking force on a wheel i
r = dynamic tyre radius
B = braking characteristic value
$p_i$ = wheel brake pressure
$J_{Whl}$ = moment of inertia of the wheel
$\dot{\omega}_i$ = rotational acceleration of a wheel i
or

$$\hat{F}_{x,i} = f\{r, B, p_i\}$$.

**8.** Method according to Claim 7, **characterized in that** the interference yaw torque is determined according to the relationship

$$\hat{M}_z = f\{\hat{F}_{FL}, s_{FL}, \hat{F}_{FR}, s_{FR}, l_F, \hat{F}_{RL}, s_{RL}, \hat{F}_{RR}, s_{RR}, \delta\}$$,

where
$\hat{F}_{FL}$ = braking force front left
$s_{FL}$ = half track gauge of the left-hand front wheel
$\hat{F}_{FR}$ = braking force front right
$s_{FR}$ = half track gauge of the right-hand front wheel
$l_f$ = distance of the front axle from the centre of gravity
$\hat{F}_{RL}$ = braking force rear left
$s_{RL}$ = half track gauge of the left-hand rear wheel
$\hat{F}_{RR}$ = braking force rear right
$s_{RR}$ = half track gauge of the right-hand rear wheel
$\delta$ = wheel lock angles of the steered wheels.

**9.** Method according to one of Claims 1 to 8, **characterized in that** the compensation gains $K_{FFW}$ of the individual, fed-back controlled variables are adapted as a function of the driving behaviour of the vehicle and, if appropriate, environmental conditions.

**10.** Method according to one of Claims 1 to 9, **characterized in that** the second compensation component $\Delta\delta_R$ of the steering angle requirement $\Delta\delta$ is determined from a P-component $\Delta\delta_{R,P}$ based on the yaw rate deviation $\Delta\dot{\psi}$ and from a D-component $\Delta\delta_{R,D}$ based on the yaw acceleration deviation $\Delta\ddot{\psi}$.

**11.** Method according to Claim 10, **characterized in that** the P-component is determined according to the relationship

$$\Delta\delta_{R,P} = K_{FB,P}(v) * \Delta\dot{\psi}$$.

**12.** Method according to either of Claims 10 and 11, **characterized in that** the gain factor $K_{FB,P}(v)$ for the feedback of the controlled variable of yaw rate deviation $\Delta\dot{\psi}$ is derived a function of the vehicle speed.

**13.** Method according to one of Claims 10 to 12, **characterized in that** the D-component is determined according to the relationship

$$\delta_{R,D} = K_{FB,D}(v) * \Delta\ddot{\psi}$$

.

**14.** Method according to one of Claims 10 to 13, **characterized in that** the gain factor $K_{FB,D}(v)$ for the feedback of the controlled variable of yaw acceleration deviation $\Delta\ddot{\psi}$ is derived a function of the vehicle speed v.

**15.** ABS control method, wherein a yaw behaviour which is caused by braking operations with different brake pressures and/or braking forces on the individual wheels and is determined from the braking force difference determined is at least partially compensated by an intervention in a steering system of the vehicle which can be controlled and/or regulated, **characterized by** a method according to one of Claims 1 to 14.

**16.** ABS control method according to Claim 15, **characterized in that** a driving state with a yaw behaviour caused by different brake pressures and/or braking forces is determined and steering interventions are permitted when at least the following conditions are met upon detection of driving straight ahead or cornering:

    a) brake light switch signal present, and
    b) brake light switch sensor in order, and
    c) braking by driver detected by means of THZ pressure and
    d) forward driving detected.

**17.** ABS control method according to Claim 15 or 16, **characterized in that** when driving straight ahead is detected at least one of the further, following conditions is met:

    e1) when, for a certain time period, one front wheel is under the ABS control and the other front wheel is not under the ABS control, or
    e2) when the two front wheels are in the first ABS cycle and the pressure difference on the front axle is greater than a limit value, or
    e3) when, for a specific time period, the two front wheels are under ABS control and at least one front wheel has a specific minimum ABS blocking pressure, and one blocking pressure exceeds the blocking pressure of the other wheel by more than a limiting value.

**18.** ABS control method according to Claim 16 or 17, **characterized in that** upon detection of cornering at least one of the further following conditions is met:

    e1) the ABS controls the front wheel on the outside of the curve before the front wheel on the inside of the curve, or when for a time period
    e2) the two front wheels are under the ABS control and at least one front wheel has a specific minimum ABS blocking pressure, and the blocking pressure of the wheel on the inside of the curve is greater than the blocking pressure of the wheel on the outside of the curve by more than a specific limiting value.

**19.** ABS control method according to one of Claims 16 to 18, **characterized in that** at least one of the following requirements must be met in order to terminate the steering interventions:

    a) no front wheel is under the ABS control, or
    b) no brake light switch signal is present, or
    c) the brake light switch sensor is defective, or
    d) braking by the driver is not detected (no THZ pressure present).

**20.** ABS brake pressure control with individual wheel control at least on one vehicle axle, in the case of which, owing to a different friction coefficient on the two vehicle sides, a yaw behaviour occurring during the ABS control is at least partially compensated by virtue of the fact that a compensation steering angle is determined and superimposed on the vehicle steering angle with the use of the method according to one of Claims 1 to 19, **characterized by** the steps of permitting high pressure build-up gradients on the wheel with a high friction coefficient, and permitting pressure differences on the rear axle according to the relationship

$$\Delta p_{HA} = f\left(\dot{\psi}, \delta_{Whl}, v, a_y\right)$$

,

where
$\dot{\psi}$ = *yaw rate*
$\delta_{Whl}$ = *wheel lock angle*
$v$ = *vehicle speed*
$\alpha_y$ = *lateral acceleration.*

**21.** ABS brake pressure control according to Claim 20, **characterized in that** upon failure of the steering system which can be controlled and/or regulated, recourse is made to the conventional ABS control strategy.

**22.** Driving dynamics regulator having at least an ESP and an ABS function which are connected to a regulator and/or a control for steering correction, **characterized by**
a first determination unit for determining the steering angle prescribed by the driver,
a second determination unit for determining an interference variable compensation steering angle on the basis of braking forces,
a third device for determining an interference variable compensation steering angle on the basis of the vehicle yaw behaviour, and
a logic unit for combining the first and second interference variable compensation steering angles to form a compensation steering angle requirement.

## Revendications

**1.** Procédé d'augmentation de la stabilité de roulage d'un véhicule en cours de freinage, dans lequel des angles de braquage de compensation sont déterminés au moyen de plusieurs grandeurs d'entrée pour un système de braquage régulé et/ou asservi, de telle sorte que la stabilité de roulage du véhicule soit augmentée par des interventions de braquage,
**caractérisé par** les étapes qui consistent à
déterminer une première partie de compensation de grandeurs parasites d'un ordre $\Delta\delta_{GMK}$ de braquage de compensation en faisant intervenir des différences de force de freinage entre les roues freinées,
déterminer une deuxième partie de compensation de grandeurs parasites à partir de l'état de roulage ou de la trajectoire du véhicule et
modifier l'angle de braquage en fonction des parties de compensation de grandeurs parasites,
la première et la deuxième partie de compensation des grandeurs parasites étant additionnées dans un additionneur et étant délivrées à la régulation ou à la commande pour corriger l'angle de braquage prédéterminé par le conducteur.

**2.** Procédé selon la revendication 1, **caractérisé en ce que** la deuxième partie de compensation est déterminée dans un dispositif qui présente un circuit de modélisation de référence du véhicule dans lequel les grandeurs d'entrée nécessaires pour déterminer la trajectoire, par exemple la vitesse du véhicule, l'angle de braquage, et éventuellement une valeur de frottement sont introduites et qui détermine une valeur de consigne d'une grandeur de régulation sur base d'un modèle du véhicule qui reproduit les propriétés du véhicule et qui est situé dans le circuit de modélisation de référence du véhicule, et dans lequel cette valeur de consigne est comparée dans un comparateur avec une valeur mesurée de cette grandeur de régulation, la deuxième partie de compensation de l'angle de braquage $\Delta\delta_R$ étant calculée à partir de la valeur de comparaison (grandeur de régulation) dans un régulateur d'état de roulage.

**3.** Procédé selon la revendication 2, **caractérisé en ce que** la vitesse angulaire de lacet, l'accélération transversale et/ou l'angle de flottement sont déterminés en tant que valeurs de consigne de la grandeur de régulation.

**4.** Procédé selon l'une des revendications 1 à 3, **caractérisé en ce que** la première partie de compensation $\Delta\delta_Z$ est déterminée en faisant intervenir un couple parasite de lacet $M_Z$ déterminé sur base des différentes forces de freinage et **en ce que** la deuxième partie $\Delta\delta_R$ est déterminée en faisant intervenir le comportement de lacet du véhicule.

**5.** Procédé selon l'une des revendications 1 à 4, **caractérisé en ce que** la première partie de compensation est prévue comme partie de commande et la deuxième partie de compensation comme partie de régulation.

**6.** Procédé selon l'une des revendications 1 ou 5, **caractérisé en ce que** le couple parasite $M_z$ est déterminé par association logique entre l'angle de braquage des roues directrices, les pressions de freinage et le comportement de rotation des roues.

**7.** Procédé selon la revendication 6, **caractérisé en ce que** la force de freinage est déterminée à partir des pressions de freinage en fonction de la relation :

$$\hat{F}_{x,i} = f\{r, B, p_i, J_{Whl}, \dot{\omega}_i\}$$

dans laquelle

$\hat{F}_{x,i}$ = force de freinage sur la roue i
$r$ = rayon dynamique du bandage de roue
$B$ = valeur caractéristique de freinage
$p_i$ = pression de freinage sur la roue
$J_{Whl}$ = couple d'inertie de la roue
$\dot{\omega}_i$ = accélération de rotation de la roue i ou de la relation

$$\hat{F}_{x,i} = f\{r, B, p_i\}$$

**8.** Procédé selon la revendication 7, **caractérisé en ce que** le couple parasite de lacet est déterminé à partir de l'équation :

$$\hat{M}_z = f\{\hat{F}_{FL}, s_{FL}, \hat{F}_{FR}, s_{FR}, l_F, \hat{F}_{RL}, s_{RL}, \hat{F}_{RR}, s_{RR}, \delta\}$$

dans laquelle

$\hat{F}_{FL}$ = force de freinage à l'avant gauche
$S_{FL}$ = moitié de la largeur de la bande de roulement de la roue avant droite
$\hat{F}_{FR}$ = distance entre l'essieu avant et le centre de gravité
$S_{FR}$ = force de freinage à l'arrière gauche
$l_F$ = moitié de la largeur de la bande de roulement de la roue arrière gauche
$\hat{F}_{RL}$ = force de freinage à l'arrière droit
$S_{RL}$ = moitié de la largeur de la bande de roulement de la roue arrière gauche
$\hat{F}_{RR}$ = angle de braquage des roues directrices
$S_{RR}$ = moitié de la largeur de la bande de roulement de la roue arrière droite
$\delta$ = angle de braquage des roues directrices

**9.** Procédé selon l'une des revendications 1 à 8, **caractérisé en ce que** les amplifications de compensation $K_{FFW}$ des différentes grandeurs de régulation délivrées sont adaptées en fonction du comportement de roulage du véhicule et éventuellement des conditions ambiantes.

**10.** Procédé selon l'une des revendications 1 à 9, **caractérisé en ce que** la deuxième partie de compensation $\Delta\delta_R$ de la demande d'angle de braquage $\Delta\delta$ est déterminée à partir d'une partie P $\Delta\delta_{R,P}$ qui est basée sur l'écart de vitesse de lacet $\Delta\dot{\psi}$ et d'une partie D $\Delta\delta_{R,D}$ basée sur l'écart d'accélération de lacet $\Delta\ddot{\psi}$.

**11.** Procédé selon la revendication 10, **caractérisé en ce que** la partie P est déterminée à partir de l'équation

$$\Delta \delta_{R,P} = K_{FB,P}(v) * \Delta \dot{\psi}$$ .

**12.** Procédé selon l'une des revendications 10 à 11, **caractérisé en ce que** le facteur d'amplification $K_{FB,P}(v)$ de la rétroaction de la grandeur de régulation écart de vitesse de lacet $\Delta\dot{\psi}$ s'effectue en fonction de la vitesse du véhicule.

**13.** Procédé selon l'une des revendications 10 à 12, **caractérisé en ce que** la partie D est déterminée à partir de l'équation $\delta_{K,D}=K_{FW,D}(v)*\Delta\ddot{\psi}$.

**14.** Procédé selon l'une des revendications 10 à 13, **caractérisé en ce que** le facteur d'amplification $K_{FB,D}(v)$ de la rétroaction de la grandeur de régulation écart d'accélération de lacet $\Delta\ddot{\psi}$ s'effectue en fonction de la vitesse v du véhicule.

**15.** Procédé de régulation ABS, dans lequel un comportement de lacet provoqué par des opérations de freinage dans lesquelles les pressions ou forces de freinage sont différentes sur les différentes roues et déterminées à partir d'une différence déterminée entre les forces de freinage est compensé au moins partiellement par une intervention sur un système de braquage asservi ou régulé du véhicule,
**caractérisé par** un procédé selon l'une des revendications 1 à 14.

**16.** Procédé de régulation ABS selon la revendication 15, **caractérisé en ce que** l'état de roulage dans lequel un comportement de lacet provoqué par des différences de pression ou de forces de freinage est déterminé et des interventions de braquage sont déclenchées si au moins l'une des conditions suivantes est satisfaite lorsque le déplacement détecté est en ligne droite ou en virage :

    a) présence d'un signal de feux stop et
    b) détecteur de commutateur de feux stop en fonctionnement correct et
    c) freinage par le conducteur détecté au moyen de la pression THZ et
    d) roulage vers l'avant détecté.

**17.** Procédé de régulation ABS selon les revendications 15 ou 16, **caractérisé en ce que** lorsqu'il est détecté que le déplacement est en ligne droite, au moins l'une des autres conditions suivantes est satisfaite :

    e1) si pendant une durée définie, une roue avant est en régulation ABS et l'autre roue avant n'est pas en régulation ABS,
    e2) si les deux roues avant sont dans le premier cycle ABS et si la différence de pression sur l'essieu avant est supérieure à une valeur limite ou
    e3) si pendant une durée définie, les deux roues avant sont en régulation ABS, au moins une roue avant présente une pression minimale de blocage ABS définie et une des pressions de blocage dépasse de plus d'une valeur limite la pression de blocage de l'autre roue.

**18.** Procédé de régulation ABS selon les revendications 16 ou 17, **caractérisé en ce que** lorsqu'il est détecté que le déplacement est en virage, au moins l'une des conditions suivantes est satisfaite :

    e1) la roue avant située à l'extérieur du virage passe en régulation ABS avant la roue avant intérieure au virage
    e2) pendant un intervalle de temps, les deux roues avant sont en régulation ABS et au moins une roue avant présente une pression minimale de blocage ABS définie et la pression de blocage de la roue située à l'intérieur du virage est supérieure de plus qu'une valeur limite définie à la pression de blocage de la roue située à l'extérieur du virage.

**19.** Procédé de régulation ABS selon l'une des revendications 16 à 18, **caractérisé en ce qu'**au moins l'une des conditions suivantes doit être satisfaite pour que les interventions de braquage soient terminées :

    a) aucune roue avant n'est en régulation ABS,
    b) absence d'un signal de commutateur de feux stop,
    c) le détecteur de commutateur de feux stop est défectueux ou
    d) aucun freinage par le conducteur n'est détecté (absence de pression THZ).

**20.** Régulation ABS de la pression de freinage avec régulation séparée sur les roues d'au moins un essieu du véhicule, dans lequel sur base de différentes valeurs de frottement sur les deux côtés du véhicule, un comportement de lacet qui survient en régulation ABS est compensé au moins partiellement en déterminant un angle de braquage de compensation et en le superposant à l'angle de braquage du véhicule par recours au procédé selon l'une des revendications 1 à 19, **caractérisée par** les étapes qui consistent à :

permettre un haut gradient d'établissement de pression sur la roue qui présente un haut coefficient de frottement et

permettre des différences de pression sur l'essieu arrière en application de l'équation $\Delta p_{HA}=f(\dot{\psi},\delta_{whl},v,a_y)$, avec $\dot{\psi}$. = vitesse de lacet, $\delta_{Whl}$ = angle de braquage des roues, v = vitesse du véhicule et ay = accélération transversale.

**21.** Régulation ABS de la pression de freinage selon la revendication 20, **caractérisée en ce qu'**en cas de défaillance du système de braquage asservi ou régulé, on revient sur la stratégie habituelle de régulation ABS.

**22.** Régulateur de dynamique de roulage présentant au moins une fonction ESP et une fonction ABS reliées à un régulateur et/ou à une commande en vue de la correction du braquage,
**caractérisé par**
une première unité de détermination qui détermine l'angle de braquage défini par le conducteur,
une deuxième unité de détermination qui détermine un angle de braquage de compensation des parasites sur base des forces de freinage,
un troisième dispositif qui détermine un angle de braquage de compensation des grandeurs parasites sur base du comportement de lacet du véhicule et
une unité logique qui associe le premier et le deuxième angle de braquage de compensation de grandeurs parasites en une commande d'angle de braquage de compensation.

Bild 1: asymmetrische Bremskräfte und Störgiermoment

Bild 2a: Druckverlauf an Vorderachse bei aktiver Giermomentbegrenzung

Bild 2b: Druckverlauf an Hinterachse bei aktivem SelectLow

Fahrervorgabe Lenkradwinkel $\delta_{DRV}$

$\delta_{WHL}$

Lenkübersetzung

$\delta_{DRV}$

$\Delta\delta$

überlagerter Fahrzustandsregler

$\delta_R$

Fahrzustands- größen

$(\dot{\psi}, a_y, v, \hat{\beta}, \hat{\mu})$

Radbrems- drücke $p_i$

Raddreh- zahlen $\omega_i$

Störgrößen- aufschaltung/ Störgrößen- kompensation

$\delta_Z$

$\delta_{WHL}$

Regelsystem

Bild 3: Blockschaltbild mit Darstellung des Regelsystems mit Störgrößen- aufschaltung und überlagerter Fahrzustandsregelung

Fahrzeuggeschwindigkeit v

Radbremsdrücke $p_i$

$p_i$

v

$p_i$

Raddreh- zahlen $\omega_i$

Störgiermoment- schätzung

$\hat{M}_z$

adaptive Störgrößen- kompensation

$\delta_Z$

$\delta_{WHL}$

Störgrößenaufschaltung/Störgrößenkompensation

Bild 4: Störgrößenaufschaltung mit Schätzung des Störgiermoments

24

Fahrzeuggeschwindigkeit v

Reibwert $\hat{\mu}$

$\delta_{DRV}$

Referenz-Fahrzeugmodell

$\dot{\psi}_{ref}$, $a_{y,ref}$, $\beta_{ref}$

v

Fahrzustandsgrößen ($\dot{\psi}$, $a_y$, $\hat{\beta}$)

adaptive Fahrzustands-regelung

$\delta_R$

Figur 5: Überlagerte Fahrzustandsregelung

Fahrzeuggeschwindigkeit v

$\delta_{WHL}$

Faktor für Lenkwinkel

v

$\dot{\psi}$

Faktor für Gierrate

Berücksichtigung der Fahrzeug-geschwindigkeit

$\Delta p_{HA}$

Druckdifferenzbestimmung für Hinterachse (aufgeweichtes SelectLow)

Bild 6: Bestimmung der Druckdifferenz an der Hinterachse aus dem fahrdynamischen Zustand des Fahrzeugs

→ genauso wie Geschwindigkeit v sollte hier auch die Querbeschleunigung berücksichtigt sein!

Bild 7a: Druckverlauf an Vorderachse mit angepaßter Giermomentbegrenzung
(ermöglicht aufgrund automatischen Gegenlenken des Regelsystems)

Bremsbeginn

SelectLow aufgeweicht ───────────▶

Bremsdrücke

abhängig vom fahrdynamischen
Zustand wird Druckdifferenz an
Hinterachse aufgebaut

Zeit

── Druckverlauf am Hinterrad auf Niedrigreibwertseite

──── Druckverlauf am Hinterrad auf Hochreibwertseite

Bild 7b: Druckverlauf an Hinterachse aufgrund Aufweichung des SelectLows
(ermöglicht durch automatisches Gegenlenken des Regelsystems)

Bild 8: Fahrzeuggeometrie

Figur 9

ABS-Regelzyklus:

```
        ┌─────────────────┐
        │     Phase 0     │
        └────────┬────────┘
                 │
                 ▼
        ┌─────────────────┐
        │  Phase 1 aus 0  │
        └────────┬────────┘
                 │
                 ▼
        ┌─────────────────┐
        │     Phase 2     │◄───┐
        └────────┬────────┘    │
                 │             │
                 ▼             │
        ┌─────────────────┐    │
        │     Phase 4     │    │
        └────────┬────────┘    │
                 │             │
                 ▼             │
        ┌─────────────────┐    │
        │     Phase 3     │────┘
        └─────────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4038079 A1
- US 5316379 A

- DE 19751227 A1